(19) Europäisches Patentamt
European Patent Office
Office européen des brevets

(11)  **EP 1 860 664 B1**

(12)  **FASCICULE DE BREVET EUROPEEN**

(45) Date de publication et mention
de la délivrance du brevet:
**20.04.2011  Bulletin 2011/16**

(51) Int Cl.:
**G21C 7/00** *(2006.01)*      **G21D 3/12** *(2006.01)*
**G21C 7/08** *(2006.01)*

(21) Numéro de dépôt: **07290613.4**

(22) Date de dépôt: **15.05.2007**

(54) **Méthode de régulation de paramétres de fonctionnement du coeur d'un réacteur  nucléaire à eau sous pression.**

Verfahren zur Regelung der Leistungsparameter des Kerns eines Druckwasserreaktors

Method of regulating operating parameters of the core of a pressurised water reactor.

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité:  **22.05.2006  FR 0604572**

(43) Date de publication de la demande:
**28.11.2007  Bulletin 2007/48**

(73) Titulaire: **Areva NP**
**92400 Courbevoie (FR)**

(72) Inventeur: **Grossetete Alain**
**92000 Nanaterre (FR)**

(74) Mandataire: **Domenego, Bertrand**
**Cabinet Lavoix**
**2, place d'Estienne d'Orves**
**75441 Paris Cedex 09 (FR)**

(56) Documents cités:
**EP-A- 0 128 834      EP-A1- 0 336 338**
**DE-A1- 2 446 247      FR-A1- 2 395 572**
**FR-A1- 2 493 582      FR-A1- 2 544 907**

**Description**

L'invention concerne en général les méthodes de conduites de réacteurs nucléaires.

Plus précisément, l'invention concerne une méthode de régulation de paramètres de fonctionnement du coeur d'un réacteur nucléaire à eau sous pression, selon le préambule de la revendication 1.

On connaît par le document FR-2 493 582 une méthode dans laquelle la température du liquide primaire est régulée automatiquement par déplacement des groupes de barres de contrôle en fonction de la puissance demandée à la turbine, de la valeur courante de la température et d'une température de référence. La distribution axiale de puissance thermique (et neutronique) est régulée automatiquement en déplaçant certains groupes, choisis de manière appropriée. Enfin, le paramètre représentatif de la capacité de remontée en puissance du réacteur est contrôlé par un opérateur, en ajustant la concentration de bore dans le liquide primaire par injection soit d'eau pure, soit d'une solution de bore concentré.

Dans cette méthode, un groupe doit être maintenu inséré en permanence dans la partie basse du coeur, pour pouvoir assurer le contrôle de la distribution axiale de puissance. Cette contrainte est impossible à satisfaire quand le réacteur fonctionne à puissance élevée, tous les groupes de barres de contrôle étant alors situés dans la partie haute du coeur. Les opérateurs doivent dans ce cas inhiber la régulation automatique de la température et de la distribution axiale de puissance selon le mode indiqué ci-dessus, et basculer celle-ci sur un autre mode de fonctionnement permettant uniquement la régulation automatique de la température.

Ce basculement nécessite une stabilisation de la tranche : la méthode de régulation du coeur décrite ci-dessus ne permet donc pas de faire varier automatiquement la puissance de la turbine quand les groupes sont situés dans la zone de basculement entre les deux modes de régulation. Le fonctionnement du réacteur "en réglage de fréquence" n'est pas possible dans cette zone, puisque ce fonctionnement consiste à moduler la puissance de la turbine en vue de maintenir la fréquence du réseau électrique alimenté par le réacteur à 50 Hertz.

Par ailleurs, FR 2 544 907 décrit une méthode de régulation dans laquelle des groupes dits «gris» de régulation de puissance sont déplacés en fonction de la puissance demandée à la turbine, et uniquement en fonction de cette puissance. Un groupe de régulation R est déplacé pour réguler la température du coeur. Il est prévu une gestion automatique de la concentration en bore par injection/dilution, en fonction de la position du groupe R et de la déviation de la distribution axiale de la puissance par rapport à une valeur de référence.

Dans ce contexte, l'invention vise à proposer une méthode de régulation du coeur d'un réacteur nucléaire qui permette de réaliser un contrôle automatique et efficace des trois paramètres de fonctionnement cités ci-dessus (température du liquide primaire, distribution axiale de puissance, capacité de remontée en puissance) sur une plage plus importante de puissance de fonctionnement du réacteur.

A cette fin, l'invention porte sur une méthode de régulation des paramètres de fonctionnement du coeur d'un réacteur nucléaire à eau sous pression, selon la revendication 1.

La méthode peut également présenter une ou plusieurs des caractéristiques ci-dessous, considérées individuellement ou selon toutes les combinaisons techniquement possibles :

- la première étape comprend une sous-étape de calcul de la consigne de température moyenne du liquide de refroidissement primaire dans le coeur à partir d'une grandeur représentative de la puissance fournie au réseau électrique alimenté par le réacteur,
- la première étape comprend une sous-étape de répartition des groupes de barres en un sous-ensemble de contrôle de la température moyenne du liquide de refroidissement primaire dans le coeur et un sous-ensemble lourd assurant essentiellement le contrôle de la distribution axiale de puissance, les groupes de barres du sous-ensemble lourd étant plus faiblement insérés que ceux du sous-ensemble,
- le paramètre représentatif de la capacité de remontée en puissance du réacteur est déterminé au moins à partir des positions d'insertion du ou des groupes de barres du sous ensemble de contrôle, la première étape comprenant une sous-étape de calcul d'une consigne de position du ou des groupes de barres du sous-ensemble de contrôle en fonction d'une consigne de capacité de remontée en puissance et de grandeurs acquises,
- l'étape de régulation à l'aide de la première loi de commande comprend :

    * une sous-étape de calcul des déplacements à effectuer pour le ou les groupes de barres du sous-ensemble de contrôle en fonction de la consigne et de la valeur effective de la température moyenne du liquide de refroidissement primaire dans le coeur, et
    * une sous-étape de modification de la ou des position d'insertion du ou des groupes de barres du sous-ensemble de contrôle en fonction des déplacements calculés en vue de réguler la température moyenne du liquide de refroidissement primaire dans le coeur à la consigne,

- l'étape de régulation à l'aide de la première loi de commande comprend :

* une sous-étape de calcul des déplacements à effectuer pour le ou les groupes de barres du sous-ensemble de contrôle et du déplacement à effectuer pour le coeur quandles groupes de barres sont remontés rapidement à proximité de la position haute,

- à l'étape de sélection, la première loi est sélectionnée quand au moins un groupe de barres se trouve dans une position d'insertion inférieure à une position prédéterminée, et la seconde loi est sélectionnée dans le cas contraire,
- la méthode comprend une première étape de calcul de valeurs de consigne des paramètres de fonctionnement au moins en fonction de consignes de pilotage,
- la première étape comprend une sous-étape de calcul de la consigne de température moyenne du liquide de refroidissement primaire dans le coeur à partir d'une grandeur représentative de la puissance fournie au réseau électrique alimenté par le réacteur,
- la première étape comprend une sous-étape de répartition des groupes de barres en un sous-ensemble de contrôle de la température moyenne du liquide de refroidissement primaire dans le coeur et un sous-ensemble lourd assurant essentiellement le contrôle de la distribution axiale de puissance, les groupes de barres du sous-ensemble lourd étant plus faiblement insérés que ceux du sous-ensemble,
- le paramètre représentatif de la capacité de remontée en puissance du réacteur est déterminé au moins à partir des positions d'insertion du ou des groupes de barres du sous ensemble de contrôle, la première étape comprenant une sous-étape de calcul d'une consigne de position du ou des groupes de barres du sous-ensemble de contrôle en fonction d'une consigne de capacité de remontée en puissance et de grandeurs acquises,
- l'étape de régulation à l'aide de la première loi de commande comprend :

  * une sous-étape de calcul des déplacements à effectuer pour le ou les groupes de barres du sous-ensemble de contrôle en fonction de la consigne et de la valeur effective de la température moyenne du liquide de refroidissement primaire dans le coeur, et
  * une sous-étape de modification de la ou des position d'insertion du ou des groupes de barres du sous-ensemble de contrôle en fonction des déplacements calculés en vue de réguler la température moyenne du liquide de refroidissement primaire dans le coeur à la consigne,

- l'étape de régulation à l'aide de la première loi de commande comprend:

  * une sous-étape de calcul des déplacements à effectuer pour le ou les groupes de barres du sous-ensemble de contrôle et du déplacement à effectuer pour le sous-ensemble lourd en fonction de la consigne et de la valeur effective de la distribution axiale de puissance thermique, et
  * une sous-étape de modification de la ou des positions d'insertion du ou des groupes de barres du sous-ensemble de contrôle et/ou du sous-ensemble lourd en fonction des déplacements calculés en vue de réguler la distribution axiale de puissance thermique à la consigne,

- l'étape de régulation à l'aide de la première loi de commande comprend :

  * une sous-étape de calcul de la concentration du composé absorbant en fonction de la consigne et de la valeur effective du paramètre représentatif de la capacité de remontée en puissance du réacteur, et
  * une sous-étape d'ajustement de la concentration du composé absorbant dans le liquide de refroidissement primaire à la concentration calculée en vue de réguler le paramètre représentatif de la capacité de remontée en puissance du réacteur à sa valeur de consigne,

- l'étape de régulation à l'aide de la seconde loi de commande comprend :

  * une sous-étape de calcul du ou des déplacements à effectuer pour le ou les groupes de barres du sous-ensemble de contrôle et du déplacement à effectuer pour le sous-ensemble lourd en fonction de la consigne et de la valeur effective de la température moyenne du liquide de refroidissement primaire dans le coeur et en fonction de la consigne et de la position effective du groupe P1, et
  * une sous-étape de modification de la ou des positions d'insertion du ou des groupes du sous-ensemble de contrôle et/ou du sous-ensemble lourd en fonction des déplacements calculés, en vue de réguler la température moyenne du liquide de refroidissement primaire dans le coeur à la consigne,

- le sous-ensemble de contrôle est déplacé en priorité pour réguler la température moyenne du liquide de refroidissement primaire dans le coeur, le sous-ensemble lourd étant déplacé quand le sous-ensemble de contrôle est arrivé aux limites d'une bande morte centrée sur sa consigne de position,

- l'étape de régulation à l'aide de la seconde loi commande comprend :

    * une sous-étape de calcul de la concentration du composé absorbant en fonction de la consigne et de la valeur effective de la distribution axiale de puissance thermique, et
    * une sous-étape d'ajustement de la concentration du composé absorbant dans le liquide de refroidissement primaire à la concentration calculée en vue de réguler la distribution axiale de puissance thermique à la consigne,

- l'étape de régulation à l'aide de la seconde loi de commande comprend :

    * une sous-étape de calcul du ou des déplacements à effectuer pour le ou les groupes de barres du sous-ensemble de contrôle et du déplacement à effectuer pour le sous-ensemble lourd en fonction de la consigne et de la valeur effective des positions d'insertion du ou des groupes de barres du sous-ensemble de contrôle, et
    * une sous-étape de modification des positions d'insertion du ou des groupes du sous-ensemble de contrôle et/ou du sous-ensemble lourd en fonction des déplacements calculés, en vue de maintenir le ou les groupes du sous-ensemble de contrôle dans une bande morte autour la consigne de position d'insertion,

- les groupes de barres du sous-ensemle de contrôle sont insérés ou extraits séquentiellement quand la puissance thermique produite par le coeur varie, deux groupes insérés ou extraits successivement présentant des positions d'insertion respectives séparées l'une de l'autre par un écart constamment inférieur à une limite prédéterminée.

D'autres caractéristiques et avantages de l'invention ressortiront de la description qui en est donnée ci-dessous, à titre indicatif et nullement limitatif, en référence aux figures annexées, parmi lesquelles :

- la figure 1 est une représentation schématique montrant les principales étapes de la méthode selon l'invention ;
- la figure 2 est un diagramme de processus, détaillant les étapes des deux lois de commande mises en oeuvre dans la méthode de la figure 1 ;
- les figures 3A, 3B, 3C représentent de manière schématique les mouvements des groupes de barres de contrôle, dans un réacteur piloté à l'aide de la méthode des figures 1 et 2, quand la consigne de puissance passe de 100 % de la puissance nominale (figure 3A) à 50 % de la valeur nominale (figure 3B) puis à 30 % de la valeur nominale (figure 3C) ;
- la figure 4 est une représentation schématique de la logique de mouvement des groupes selon la méthode des figures 1 et 2, en fonction de la différence $\Delta Tmoy$ entre la température moyenne effective du liquide de refroidissement et la température de consigne (axe des abscisses, exprimée en ˚C), et de la différence $\Delta AO$ entre la distribution de puissance courante et la consigne de distribution de puissance (axe des ordonnées, exprimée en pourcentage), pour la première loi de commande (au moins un groupe inséré en partie basse du coeur) ;
- les figures 5A à 5D représentent de manière schématique les mouvements des groupes selon la première loi de commande, en vue de réguler la distribution axiale de puissance, dans différentes situations ;
- les figures 6A à 6C représentent de manière schématique la position des groupes de contrôle, en vue de réguler la capacité de remontée en puissance du réacteur, pour 2 niveaux de puissance (100% et 50%) ; et 2 valeurs de capacité de remontée en puissance (Pmax = 100% et 70%) différentes.
- la figure 7 représente de manière schématique la logique de déplacement des groupes de contrôle, en fonction de l'écart $\Delta Tmoy$ entre la température moyenne effective du liquide de refroidissement primaire et la consigne de température (axe des abscisses, exprimé en ˚C), et l'écart $\Delta Z1$ entre la position effective du groupe de contrôle P1 et la consigne de position (axe des ordonnées), pour la seconde loi de commande ; et
- les figures 8A et 8B représentent de manière schématique les mouvements des groupes de contrôle selon la seconde loi de commande, dans différentes situations.

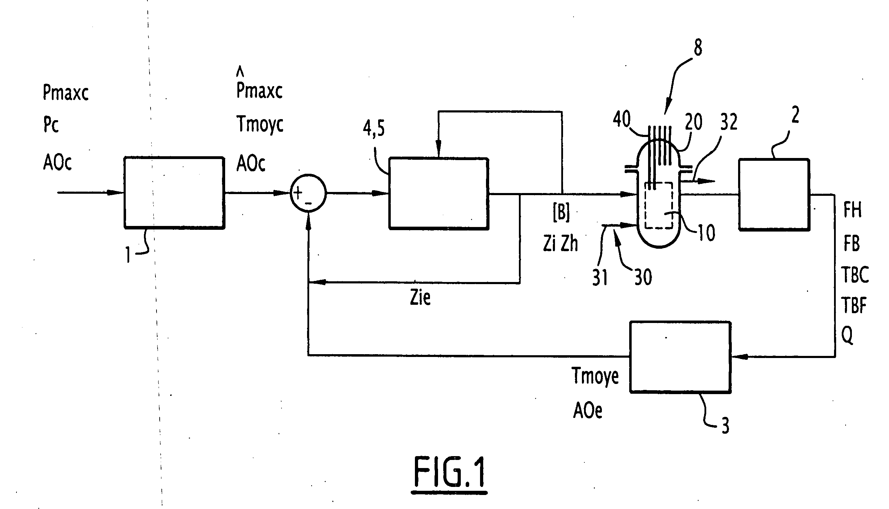

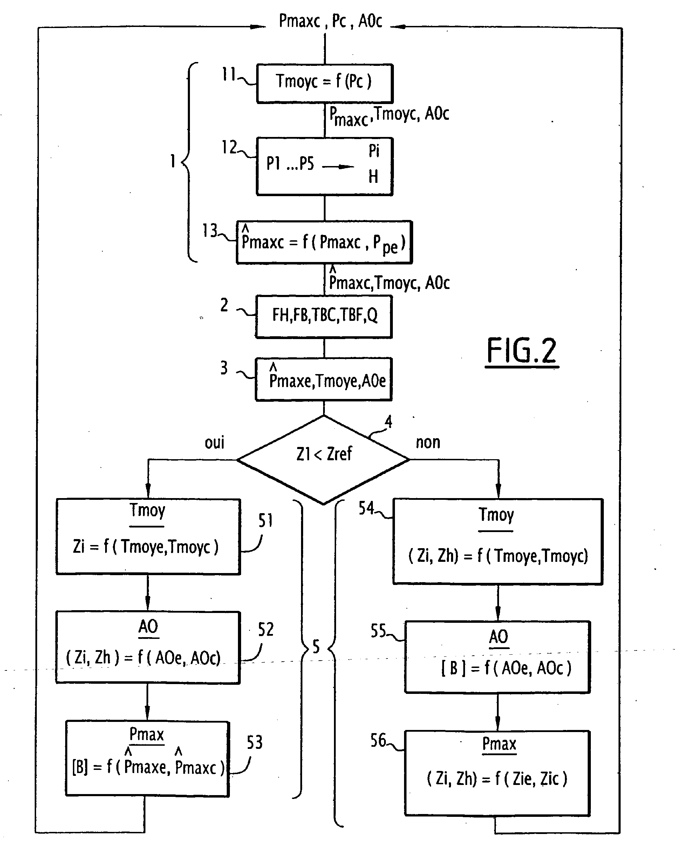

La méthode représentée de manière schématique sur les figures 1 et 2 vise à réguler le coeur d'un réacteur nucléaire, notamment d'un réacteur à eau sous pression.
Ce réacteur 8 est représenté de manière symbolique sur la figure 1 et comprend :

- un coeur 10 comportant des assemblages de combustible nucléaire ;
- une cuve 20 à l'intérieur de laquelle est disposé le coeur 10 du réacteur ;
- un générateur de vapeur (non représenté) ;
- une turbine à vapeur (non représentée) apte à entraîner un alternateur couplé au réseau de distribution électrique ;
- un circuit primaire 30 reliant en circuit fermé la cuve 20 à un côté primaire du générateur de vapeur ;
- un circuit secondaire (non représenté) reliant en circuit fermé un côté secondaire du générateur de vapeur à la turbine.

Le coeur 10 produit une puissance thermique variable. Il est divisé en une zone haute et une zone basse.

Le circuit primaire 30 est apte à assurer la circulation à travers le coeur 10 d'un liquide de refroidissement primaire, comprenant essentiellement de l'eau et du bore dissout, ce liquide s'échauffant au contact des assemblages de combustibles nucléaire puis cédant sa chaleur en passant dans le générateur de vapeur. Le circuit secondaire est apte à assurer la circulation d'un liquide de refroidissement secondaire, comprenant essentiellement de l'eau, ce liquide étant vaporisé dans le générateur de vapeur par la chaleur cédée par le fluide primaire. La vapeur entraîne la turbine, puis est recondensée et renvoyée vers le générateur de vapeur.

L'alternateur fournit au réseau une puissance électrique variable en fonction de la demande du réseau. Le réacteur est piloté de manière à adapter en permanence la puissance thermique fournie par le coeur à la puissance électrique demandée par le réseau, en faisant varier la réactivité dans le coeur du réacteur.

Dans ce but, le réacteur est équipé des moyens suivants :

- des moyens pour ajuster la concentration en bore dissout dans le liquide de refroidissement primaire, par injection d'une solution d'acide borique concentrée dans le liquide primaire quand on veut faire varier la concentration à la hausse, ou par injection d'eau pure quand on veut faire varier la concentration à la baisse ;
- des barres 40 de contrôle de la réactivité du coeur (figure 1), chacune susceptible d'occuper dans le coeur 10 une pluralité de positions d'insertion étagées verticalement à partir d'une position haute ; les barres de contrôle 40 sont réparties par exemple en cinq groupes P1 à P5, les barres d'un même groupe étant toutes déplacées conjointement ;
- des moyens pour insérer sélectivement chaque groupe de barres P1 à P5 dans le coeur, verticalement, du haut vers le bas, jusqu'à une des positions d'insertion ;
- des moyens pour acquérir des grandeurs FH et FB représentatives des puissances thermiques produites dans les zones haute et basse du coeur, de la température TBF du liquide primaire dans la branche froide 31 du circuit primaire, c'est-à-dire immédiatement en amont du coeur, de la température TBC du liquide primaire dans la branche chaude 32 du circuit primaire, c'est-à-dire immédiatement en aval du coeur, et du débit Q de liquide primaire dans le circuit primaire.

Le bore en solution dans le liquide primaire absorbe les neutrons émis par les assemblages de combustibles nucléaires, de telle sorte que la réactivité du coeur 10 baisse quand la concentration en bore augmente.

Dans un réacteur nucléaire à eau sous pression, les assemblages de combustible nucléaire comprennent chacun un faisceau de tubes de grandes longueurs contenant des pastilles de matériau fissile, appelés crayons. Ces crayons sont disposés verticalement, parallèlement les uns aux autres, et assemblés par des grilles entretoises. Dans certains assemblages, plusieurs crayons sont remplacés par des tubes creux, appelés tubes guides.

Les barres de contrôle comprennent chacune un faisceau de tubes renfermant un matériau absorbant les neutrons. Ces tubes présentent la même longueur que les assemblages de combustibles. Ils sont reliés les uns aux autres de façon à constituer une grappe mobile d'une seule pièce dans une direction verticale. Chaque grappe est susceptible de s'insérer dans les tubes guides d'un assemblage de combustibles, de telle sorte que les tubes en matériau absorbant les neutrons sont interposés dans le réseau de crayons renfermant les pastilles de combustibles. La réactivité du coeur diminue quand on insère une barre de contrôle. Plus la barre de contrôle est basse, c'est-à-dire éloignée de sa position haute, plus la réactivité du coeur est faible.

Les grandeurs représentatives des puissances thermiques produites dans les parties haute et basse du coeur sont les flux neutroniques FH et FB dans les parties haute et basse du coeur, qui sont mesurés à l'aide de capteurs disposés à différentes hauteurs du coeur.

La méthode de régulation représentée sur la figure 1 permet de réguler de manière automatique plusieurs paramètres de fonctionnement du coeur du réacteur, en fonction de consignes de pilotage fixées par l'opérateur conduisant le réacteur, ou imposées de l'extérieur, par exemple par le réseau de distribution électrique.

Les paramètres régulés comprennent au moins la température moyenne du liquide de refroidissement primaire dans le coeur Tmoy, la distribution axiale de puissance thermique entre les zones haute et basse du coeur AO et un paramètre $\hat{P}$ max représentatif de la capacité de remontée en puissance du réacteur Pmax.

La concentration en bore dans le liquide primaire et les positions des groupes de barres P1 à P5 sont modifiées automatiquement en vue de réguler les paramètres de fonctionnement, sans intervention des opérateurs, ou avec des interventions très limitées des opérateurs, par exemple pour modifier les consignes de pilotage, ou pour valider les commandes de déplacement des groupes de barres ou de modification de la concentration en bore prévues par la méthode de régulation.

La capacité de remontée en puissance Pmax correspond à la puissance thermique susceptible d'être produite par le coeur quand les groupes de barres P1 à P5 sont remontés rapidement en haut du coeur, à proximité de leur position haute.

La distribution axiale de puissance AO est exprimée à l'aide de la relation suivante :

$$AO = (FH - FB) / (FH + FB) \qquad (1)$$

où FH et FB sont les flux neutroniques respectivement dans les parties haute et basse du coeur.

La température Tmoy est exprimée à l'aide de la relation suivante :

$$Tmoy = (TBC + TBF) / 2. \qquad (2)$$

Les consignes de pilotage du coeur comprennent une grandeur Pc représentative de la puissance secondaire à fournir par la turbine, une consigne de capacité de remontée en puissance du réacteur Pmaxc, et une consigne de distribution axiale de puissance thermique entre les zones haute et basse du coeur AOc. La grandeur représentative de la puissance secondaire $P_c$ est par exemple une mesure de puissance thermique fournie par le circuit secondaire du réacteur. En variante, on peut utiliser comme consigne une consigne de la puissance électrique fournie par l'alternateur au réseau.

Comme le montre la figure 1, la méthode de régulation comprend :

- une première étape 1 de calcul de valeurs de consigne (Tmoyc, AOc, P maxc) des paramètres de fonctionnement en fonction des consignes de pilotage (Pc, AOc, Pmaxc) fixées par l'opérateur et de la puissance thermique primaire effective (Ppe) fournie par le coeur au circuit primaire;
- une seconde étape 2 d'acquisition des valeurs effectives des grandeurs (FH, FB) représentatives des puissances thermiques produites dans les zones haute et basse du coeur, des températures du liquide de refroidissement primaire dans les branches chaude et froide (TBC, TBF) et du débit de liquide primaire (Q) ;
- une troisième étape 3 de d'évaluation des valeurs effectives (Tmoye, AOe, P maxe) des paramètres de fonctionnement au moins en fonction des grandeurs acquises (FH, FB, TBC, TBF, Q) ;
- une quatrième étape 4 de sélection d'une loi de commande de la concentration en bore [B] et des positions d'insertion Z1 à Z5 des groupes de barres P1 à P5, choisie entre des première et deuxième lois de commande différentes l'une de l'autre ;
- une cinquième étape 5 de régulation des paramètres de fonctionnement à l'aide de la loi de commande sélectionnée, en fonction des consignes (Tmoyc, AOc, P maxc) pour lesdits paramètres et des valeurs effectives (Tmoye, AOe, P maxe) évaluées.

Ces différentes étapes sont représentées de manière détaillée sur la figure 2.

La première étape 1 comprend les sous-étapes 11 à 13 illustrées sur la figure 2.

A la sous-étape 11, la consigne de température moyenne du liquide de refroidissement primaire dans le coeur Tmoyc est calculée en fonction de la consigne de puissance Pc fixée par l'opérateur. On utilise dans ce but par exemple une courbe prédéterminée donnant directement la valeur Tmoyc en fonction de Pc.

A la sous-étape 12, les groupes de barres P1 à P5 sont répartis en un sous-ensemble Pi de contrôle de la température moyenne du liquide de refroidissement primaire dans le coeur Tmoy et un sous-ensemble lourd H faiblement inséré, assurant essentiellement le contrôle de la distribution axiale de puissance AO.

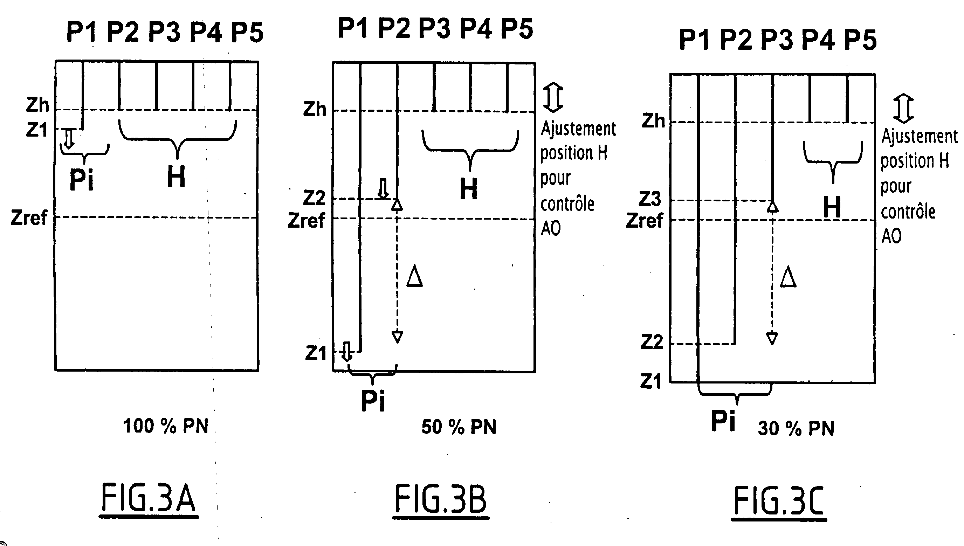

Comme le montrent les figures 3A à 3C, les groupes du sous-ensemble de contrôle Pi sont susceptibles d'être déplacés individuellement, de manière coordonnée, en vue, en particulier, de contrôler la température Tmoy. Ils sont déplacés jusqu'à des positions d'insertion, qui peuvent être différentes les unes des autres. Au contraire, les groupes du sous-ensemble lourd H sont déplacés ensemble, jusqu'à une position d'insertion identique pour tous les groupes du sous-ensemble. L'affectation des grappes constituant les groupes est modifiable, ceci afin d'être en mesure de minimiser le sous épuisement provoqué par le groupe P1 en fonctionnement nominal ainsi que de pouvoir répartir le nombre de pas sur l'ensemble des grappes. Le sous-ensemble lourd H est toujours positionné dans la moitié supérieure du coeur, ce qui signifie en d'autres termes que sa position d'insertion reste toujours inférieure à la moitié de la hauteur du coeur.

Quand le réacteur est proche de sa puissance nominale, le sous-ensemble de contrôle Pi ne contient qu'un groupe (groupe P1 sur la figure 3A) et le sous-ensemble lourd H comprend les quatre autres groupes.

Au contraire, à basse puissance du réacteur, le sous-ensemble de contrôle Pi contient plusieurs groupes (3 groupes sur la figure 3C) et le sous ensemble lourd H comprend moins de quatre groupes.

Dans la suite du texte on désignera collectivement par Zi les positions Z1, Z2, ... des différents groupes du sous-ensemble Pi, et on désignera par Zh la position unique des groupes du sous-ensemble lourd H.

La consigne P maxc du paramètre P max représentatif de capacité de remontée en puissance Pmax du réacteur est calculée à la sous-étape 13.

Le paramètre $\hat{P}$ max correspond au vecteur ayant pour coordonnées les positions d'insertion Zi des groupes de barres du sous-ensemble Pi. Il est déterminé par un logiciel de calcul, à partir de Pmax et de la puissance primaire effective Ppe. La puissance primaire effective Ppe est estimée à l'aide de la formule suivante :

$$Ppe = C.Q. (TBC - TBF) \qquad\qquad (3)$$

C étant la capacité calorifique du liquide primaire.

Le logiciel estime la variation de la puissance primaire susceptible d'être obtenue par déplacement séquentiel des groupes du sous-ensemble Pi vers le haut ou vers le bas, en partant de la situation effective du coeur (concentration effective de bore dans le liquide primaire, position effective des groupes), suivant la procédure d'insertion séquentielle détaillée plus loin. Connaissant la puissance primaire effective Ppe et la courbe de variation de la puissance primaire en fonction des positions Zi, il est possible d'associer à une valeur de capacité de remontée en puissance Pmax un vecteur de positions Zi.

La consigne P maxc correspond donc à une valeur de consigne Zic des positions d'insertion des groupes de barres du sous-ensemble Pi. Les valeurs Zic sont les positions théoriques des groupes de barres du sous-ensemble Pi qui permettent d'obtenir à la fois une puissance primaire effective égale à Ppe et une capacité de remontée en puissance du réacteur égale à la consigne Pmaxc.

La procédure d'insertion séquentielle des groupes du sous-ensemble Pi est décrite ci-dessous.

Comme le montrent les figures 3A à 3C, les consignes de position sont déterminées en prévoyant une insertion séquentielle des groupes du sous-ensemble Pi lors de la variation de puissance. Ainsi, pour une puissance primaire effective Ppe égale à 100% de la puissance nominale (figure 3A), le sous-ensemble Pi ne comprend que le groupe P1, et on attribue au groupe P1 une position de consigne Z1c faiblement insérée, les quatre autres groupes P2 à P5 étant consignés en position haute et formant le sous groupe lourd H. Quand la puissance primaire Ppe est plus faible, la consigne de position Z1c du groupe P1 est choisie plus basse. Quand la puissance primaire Ppe est inférieure à un seuil (80% par exemple), l'écart entre la consigne de position du groupe P1 et celle du groupe P2 dépasse une limite maximum (1/2 hauteur du coeur par exemple) et le groupe P2 est basculé du sous-ensemble H vers le sous-ensemble de contrôle Pi. Les consignes de position des deux groupes sont calculées de manière à maintenir un écart d'insertion Δ constant (dans l'exemple ci-dessus 50 % de la hauteur du coeur, de préférence compris entre 40% et 60% de la hauteur du coeur) prédéterminé entre eux (voir figure 3B, illustrant les positions des groupes pour une consigne de puissance de 50% de la puissance nominale). Quand la puissance primaire $P_{pe}$ est inférieure à un autre seuil (50% par exemple) l'écart entre la consigne de position du groupe P2 et celle du groupe P3 dépasse une limite maximum (1/2 hauteur du coeur par exemple) et le groupe P3 est basculé du sous-ensemble H vers le sous-ensemble de contrôle Pi (figure 3C, illustrant les positions des groupes pour une consigne de puissance de 30%). Les consignes de position des groupes P2 et P3 sont calculées de manière à maintenir l'écart d'insertion Δ prédéterminé entre eux. Parallèlement, on attribue au groupe P1 une position de consigne correspondant au maximum d'insertion, de telle sorte que l'écart entre les consignes de position du groupe P1 et du groupe P2 se réduit.

A la seconde étape 2, les flux neutroniques FH et FB dans les parties haute et basse du coeur, les températures TBC et TBF du liquide de refroidissement primaire dans les branches chaude et froide du circuit primaire, et le débit Q de liquide primaire dans le circuit primaire sont acquis. Ces grandeurs sont mesurées à l'aide des systèmes de mesure du réacteur, ou récupérées dans le système de conduite du réacteur.

A la troisième étape 3, les valeurs effectives Tmoye, AOe, P maxe des paramètres de fonctionnement Tmoy, AO et P max sont évaluées. La valeur effective de la distribution axiale de puissance AOe est calculée, à l'aide de la formule (1) ci-dessus, en fonction des valeurs des flux neutroniques FH et FB acquises à la seconde étape. La valeur effective Tmoye de la température Tmoy est calculée, à l'aide de la formule (2) ci-dessus, en fonction des valeurs des températures TBC et TBF acquises à la seconde étape. La valeur effective $\hat{P}$ maxe du paramètre représentatif de Pmax est calculée à partir des positions d'insertion effectives Zie des groupes de barres du sous-ensemble de contrôle Pi et de la puissance primaire effective Ppe. Ces positions Zie sont récupérées par exemple dans le calculateur pilotant les moyens d'insertion des groupes de barre. La puissance Ppe est calculée, à l'aide de la formule (3) ci-dessus, en fonction des valeurs de températures TBF et TBC et de la valeur de débit primaire Q acquises à la seconde étape.

A la quatrième étape 4, la première loi de commande est sélectionnée quand au moins un groupe de barres se trouve dans une position d'insertion inférieure à une position prédéterminé Zref, et la seconde loi de commande est sélectionnée dans le cas contraire.

La seconde loi est donc utilisée notamment quand tous les groupes P1 à P5 sont en partie haute du réacteur, c'est-à-dire quand le réacteur fonctionne à une puissance proche de la puissance nominale.

La première loi de commande est utilisée quand un des groupes au moins est en partie basse du réacteur, c'est-à-dire quand le réacteur fonctionne à une puissance inférieure par exemple à 90% de la puissance nominale, ou dans un fonctionnement à puissance partielle avec les groupes de barres en partie haute du coeur.

L'étape de régulation 5 de la méthode quand la première loi de commande est employée est décomposée sur la partie gauche de la figure 2.

L'étape de régulation 5 à l'aide de la première loi de commande comprend un module 51 de régulation de la température Tmoy, un module 52 de régulation de la distribution axiale de puissance AO, et un module 53 de régulation de la capacité de remontée en puissance Pmax. Le module 51 de régulation de Tmoy se décompose en :

- une sous-étape de calcul des déplacements dZi à effectuer pour tous les groupes de barres du sous-ensemble de contrôle Pi, en fonction de la consigne Tmoyc et de la valeur effective Tmoye de la température moyenne du liquide de refroidissement primaire dans le coeur, et
- une sous-étape de modification des positions d'insertion Zi de tous les groupes de barres du sous-ensemble de contrôle Pi en fonction des déplacements dZi calculés à la sous-étape précédente, en vue de réguler la température moyenne du liquide de refroidissement primaire dans le coeur Tmoy à la consigne Tmoyc.

Le module 52 de régulation de la distribution de puissance AO se décompose en :

- une sous-étape de calcul du déplacement dZh à effectuer pour le sous-ensemble lourd H et des déplacements dZi à effectuer pour les groupes de barres du sous-ensemble de contrôle Pi, en fonction au moins de la consigne AOc et de la valeur effective AOe de la distribution axiale de puissance thermique, et
- une sous-étape de modification des positions d'insertion Zi du ou des groupes de barres du sous-ensemble de contrôle Pi et/ou du sous-ensemble lourd H en fonction des déplacements dZi et dZh calculés en vue de réguler la distribution axiale de puissance thermique AO à la consigne AOc.

Comme exposé ci-dessous, l'écart entre la valeur effective Tmoye et la consigne Tmoyc de la température moyenne du liquide de refroidissement est utilisé dans le calcul des déplacements des sous-ensembles Pi et H.

Par ailleurs, le sous-ensemble de contrôle Pi et le sous-ensemble lourd H sont de préférence déplacés en sens opposés en vue de réguler la distribution axiale de puissance thermique AO, de façon à ne pas perturber la température du liquide primaire Tmoy. Ceci est vrai en particulier quand Tmoy est dans une bande morte autour de sa consigne Tmoyc.

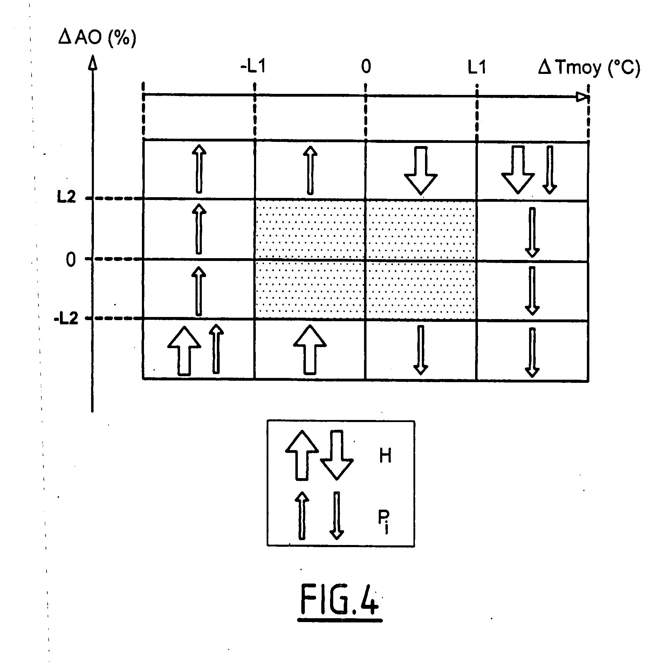

La figure 4 représente la logique de déplacement des groupes dans différentes situations, en fonction de l'écart $\Delta$Tmoy entre la température effective Tmoye et la consigne Tmoyc, et de l'écart $\Delta$AO entre la distribution axiale de puissance effective AOe et la consigne AOc.

La zone grisée représente le domaine où AO et Tmoy se trouvent chacun dans une bande morte autour de leurs consignes respectives, les modules de régulation de la température Tmoy et de la distribution de puissance AO ne prévoyant dans ce cas aucune action sur les groupes de contrôle.

On voit que, quand AO est dans sa bande morte et que Tmoy est sorti de la sienne, le sous-ensemble de contrôle Pi est déplacé par le module de régulation de Tmoy dans un sens permettant de ramener Tmoy dans la bande morte.

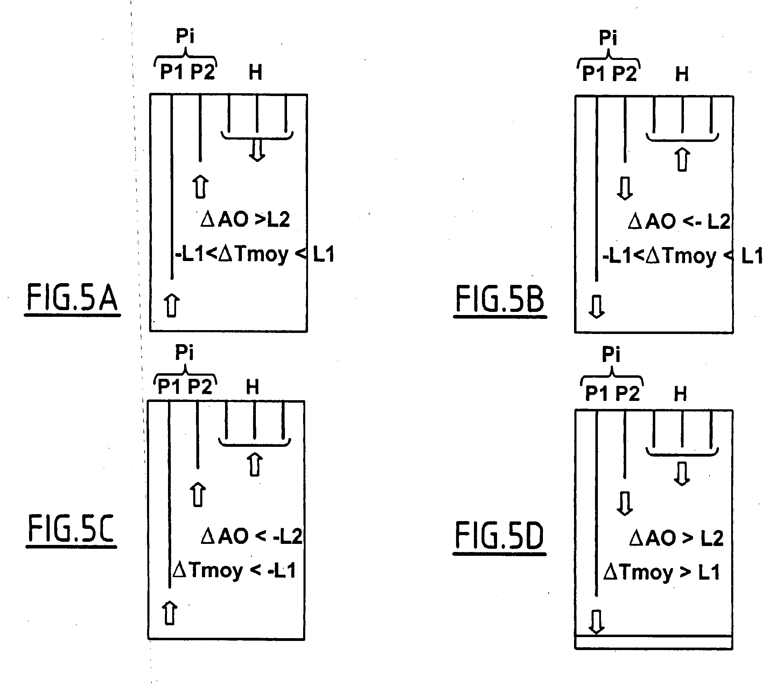

Inversement, quand Tmoy est dans sa bande morte et que AO est sorti de la sienne, le module de régulation de la distribution de puissance ordonne le déplacement soit du sous-ensemble Pi soit du sous-ensemble lourd H, en fonction du signe de l'écart de température. Par exemple, si $\Delta$AO>L2 et $\Delta$Tmoy positif, avec $\Delta$AO = AOe - AOc et $\Delta$Tmoy = Tmoye - Tmoyc, le sous-ensemble H est déplacé vers le bas. Ceci a pour effet de ramener la distribution axiale de puissance vers la consigne et également de faire baisser Tmoy, de telle sorte que $\Delta$Tmoy devient négatif. On se trouve alors dans la situation où $\Delta$AO>L2 et $\Delta$Tmoy négatif. Le module de régulation de la distribution de puissance déplace alors le sous-ensemble Pi vers le haut, comme le montre la figure 5A, ce qui compense le déplacement du sous ensemble H vers le bas vis-à-vis du contrôle de la température. La situation est la même quand $\Delta$AO est négatif (voir la ligne la plus basse de la figure 4 et la figure 5B).

En revanche, quand AO et Tmoy sortent de leurs bandes mortes respectives en même temps, la stratégie de contrôle de AO est différente. Le sous ensemble Pi est déplacé en fonction du signe de l'écart de température $\Delta$Tmoy par le module de régulation de la température. Le sous-ensemble lourd H est déplacé par le module de régulation de la distribution de puissance de façon à ramener AO vers sa valeur de consigne, mais ce déplacement est inhibé s'il va dans le sens d'un accroissement de la déviation de Tmoy par rapport à la consigne. Ainsi, quand $\Delta$AO>L2 et $\Delta$Tmoy<-L1, le sous ensemble Pi est déplacé vers le haut pour faire augmenter Tmoy. Le sous ensemble lourd H devrait être déplacé vers le bas pour ramener AO vers sa consigne, mais ce déplacement est inhibé car il conduirait à une baisse de Tmoy et donc éloignerait la température de sa consigne. Le sous-ensemble lourd H n'est donc pas déplacé dans ce cas. Le déplacement du sous ensemble lourd H est également inhibé quand $\Delta$AO<-L2 et $\Delta$Tmoy>L1. En revanche le déplacement du sous ensemble lourd H n'est pas inhibé dans les autres cas, c'est-à-dire quand $\Delta$AO<-L2 et $\Delta$Tmoy<-L1 (figure 5C), et $\Delta$AO>L2 et $\Delta$Tmoy>L1 (figure 5D).

Le module 53 de régulation de la capacité de remontée en puissance du réacteur Pmax se décompose en :

- une sous-étape de calcul de la concentration en bore [B] dans le liquide primaire en fonction de la consigne P maxc et de la valeur effective P maxe du paramètre représentatif de Pmax, et
- une sous-étape d'ajustement de la concentration en bore [B] dans le liquide de refroidissement primaire à la concentration calculée en vue de réguler le paramètre P max à la valeur de consigne P maxc.

En effet, quand P max est inférieur à une bande morte centrée sur la valeur de consigne P maxc (groupes du sous-ensemble Pi trop peu insérés), le module de régulation de Pmax provoque une dilution du liquide primaire par injection d'eau non borée. La concentration en bore baisse, ce qui provoque une augmentation de la réactivité dans le coeur, et donc une augmentation de la température du liquide primaire Tmoy. Le module de contrôle de Tmoy déplace alors le sous-ensemble de contrôle Pi vers le bas pour diminuer Tmoy, comme expliqué ci-dessus, de telle sorte que P max, qui correspond au vecteur des positions d'insertion Zi, est ramené dans sa bande morte.

Inversement, quand $\hat{P}$ max est supérieur à sa bande morte (groupes du sous-ensemble Pi trop insérés), le module de régulation de Pmax provoque une injection de bore concentré dans le liquide primaire. La réactivité du coeur diminue, ce qui entraîne une diminution de Tmoy et provoque un déplacement du sous-ensemble de contrôle Pi vers le haut par l'intermédiaire du module de contrôle de Tmoy.

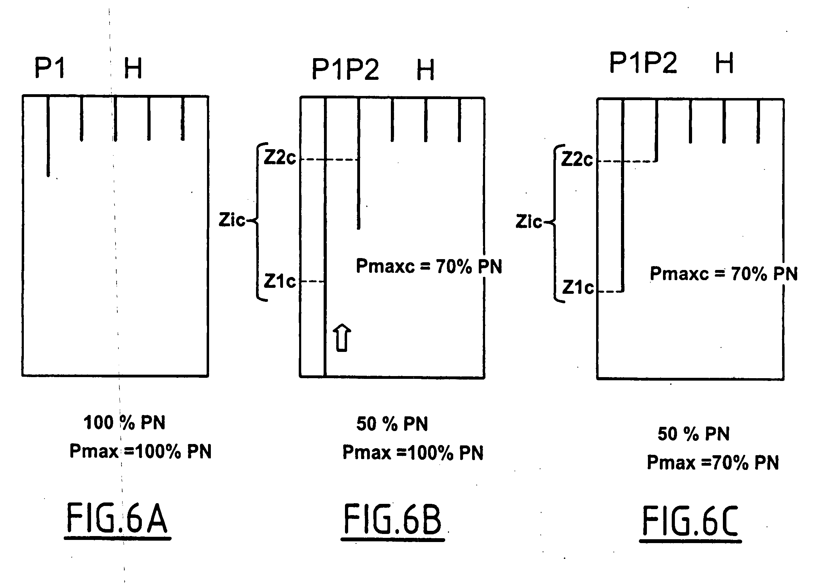

Dans une variante de réalisation, afin de minimiser les effluents, le module de régulation de Pmax 53 est partiellement ou totalement inhibé lors des transitoires de puissance. Ainsi, dans l'exemple de réalisation des figures 6A à 6C, le module 53 n'intervient pas pendant la phase de réduction de la puissance et pendant le palier bas tant que P max > P maxc.

Les figures 6A à 6C illustrent une séquence de fonctionnement du réacteur dans lequel celui-ci passe d'une puissance thermique primaire effective Ppe de 100% de la puissance nominale PN (figure 6A) à 50% de la puissance nominale PN (figure 6B), puis fait un palier à 50% de la puissance nominale PN (figure 6C). La consigne Pmaxc est fixée à 70% de la puissance nominale PN pendant toute la séquence.

A 100% de la puissance nominale (figure 6A), tous les groupes sont situés en partie haute du coeur. Pmax vaut ici 100% de la puissance nominale, ce qui est supérieur à la consigne Pmaxc. Le module de contrôle de Pmax n'entreprend aucune action.

Quand le réacteur arrive à 50% de la puissance nominale (figure 6B), les groupes P1 et P2, constituant le sous-ensemble Pi, sont insérés dans le coeur. Pmax vaut alors 100% de la puissance nominale, puisqu'il est possible de ramener très rapidement le réacteur à puissance nominale en relenant les groupes P1 et P2 en position haute. Le module de contrôle de Pmax n'entreprend aucune action, puisque la valeur effective de Pmax est supérieure à la consigne Pmaxc. La valeur effective $\hat{P}$ maxe du paramètre $\hat{P}$ max correspond alors à des positions Zie plus insérées que les consignes de positions Zic correspondant à la consigne $\hat{P}$ maxc du paramètre $\hat{P}$ max.

Pendant le palier à 50% de la puissance nominale, du xénon est produit à l'intérieur des crayons constituant les assemblages de combustible sous l'effet des réactions nucléaires, ce qui a pour effet de diminuer la réactivité du coeur et de diminuer la température Tmoy. Le module de contrôle de Tmoy provoque alors le déplacement du sous-ensemble de contrôle Pi vers le haut, de manière à contrebalancer les effets du xénon et à maintenir Tmoy constant. La puissance thermique produite par le coeur reste elle aussi constante. De ce fait, la remontée du sous-ensemble Pi réduit Pmax, puisqu'il n'est plus possible de revenir à 100% de la puissance nominale en ramenant les groupes P1 et P2 en position haute.

Quand le sous-ensemble Pi atteint la consigne de position Zic correspondant à la consigne $\hat{P}$ maxc, le module de contrôle de Pmax provoque la dilution du liquide primaire de façon à stopper la remontée du sous-ensemble Pi sous l'effet de la production de xénon (figure 6C). La consigne de position Zic et la consigne P maxc sont calculées comme décrit ci-dessus, en fonction de la consigne Pmaxc (ici 70 % de la puissance nominale) et de la puissance primaire Ppe (ici 50 % de la puissance nominale).

L'étape de régulation 5 de la méthode quand la seconde loi de commande est employée est décomposée sur la partie droite de la figure 2.

Comme précisé plus haut, la seconde loi est utilisée quand tous les groupes P1 à P5 sont en partie haute du réacteur, c'est-à-dire quand le réacteur fonctionne à une puissance proche de la puissance nominale ou alors lors d'un fonctionnement à puissance partielle grappes extraites. En conséquence, le sous-ensemble de contrôle Pi ne contient que le groupe P1 et le sous ensemble lourd H comprend les quatre autres groupes. Dans ce cas P max = Z1. La consigne P maxc est en fait une consigne de position de P1, notée Z1c dans les paragraphes suivants. De même, la valeur effective P maxe du paramètre P max est en fait la position effective Z1e du groupe P1.

Comme dans le cas de la première loi de commande, l'étape de régulation comprend un module 54 de régulation de la température Tmoy, un module 55 de régulation de la distribution axiale de puissance AO et un module 56 de régulation de la capacité de remontée en puissance Pmax. Le module 54 de régulation de Tmoy comprend :

- une sous-étape de calcul du déplacement dZ1 à effectuer pour le groupe de barres P1 (formant le sous-ensemble de contrôle Pi) et du déplacement dZh à effectuer pour le sous-ensemble lourd H en fonction de la consigne Tmoyc, de la valeur effective Tmoye de la température moyenne du liquide de refroidissement primaire dans le coeur et des consigne Z1c et position effective Z1e du groupe P1, et
- une sous-étape de modification des positions d'insertion du groupe P1 et/ou du sous-ensemble lourd H en fonction des déplacements dZ1 et dZh calculés, en vue de réguler la température moyenne du liquide de refroidissement primaire dans le coeur Tmoy à la consigne Tmoyc.

Le groupe P1 est déplacé en priorité pour réguler Tmoy, dans les limites d'une bande morte centrée sur la position de consigne Z1 c. Le sous-ensemble lourd H est déplacé quand le groupe P1 arrive aux limites de la bande morte.

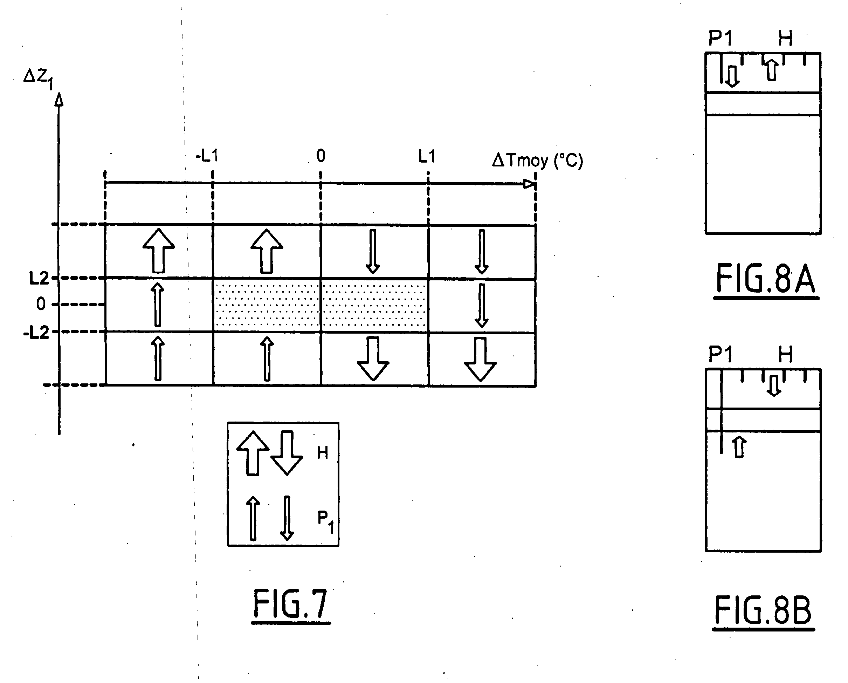

Cette stratégie de contrôle ressort de la figure 7 qui représente la logique de mouvement des groupes en fonction de l'écart $\Delta$Tmoy entre la valeur effective de Tmoye et la consigne Tmoyc (axe des abscisses) et en fonction de l'écart $\Delta$Z1 entre la position effective Z1e du groupe P1 et la consigne Z1c (axe des ordonnées), avec $\Delta$Tmoy = Tmoye - Tmoyc, et $\Delta$Z1 = Z1 e - Z1c.

On lit dans la bande centrale du tableau que quand P1 est dans une bande morte centrée sur la consigne Z1c et que $\Delta$Tmoy < -L1, le groupe P1 est déplacé vers le haut. Quand $\Delta$Z1 atteint L2, le sous-ensemble lourd H est déplacé vers le haut.

De même, quand P1 est dans la bande morte centrée sur la consigne Z1c et que $\Delta$Tmoy > L1, le groupe P1 est déplacé vers le bas. Quand $\Delta$Z1 atteint -L2, le sous-ensemble lourd H est déplacé vers le bas.

Le module 55 de régulation de la distribution axiale de puissance comprend

- une sous-étape de calcul de la concentration du composé absorbant [B] en fonction de la consigne AOc et de la valeur effective AOe de la distribution axiale de puissance thermique, et
- une sous-étape d'ajustement de la concentration du composé absorbant [B] dans le liquide de refroidissement primaire à la concentration calculée en vue de réguler la distribution axiale de puissance thermique AO à la consigne AOc.

Plus précisément, quand AO est supérieur à la consigne AOc, le module de régulation de AO commande une dilution du liquide de refroidissement primaire par injection d'eau non borée. Cette dilution a pour effet d'augmenter la réactivité du coeur et donc la température Tmoy, ce qui provoque l'intervention du module de contrôle de Tmoy. Celui-ci va alors commander l'insertion du groupe P1 et/ou du groupe H, comme décrit ci-dessus, ce qui entraîne la diminution de la puissance thermique en partie haute du réacteur et donc la diminution de AO.

Inversement, quand AO est inférieur à la consigne AOc, le module de régulation de AO commande une injection d'une solution de bore concentrée dans le liquide primaire. Cette injection a pour effet de diminuer la réactivité du coeur et donc la température Tmoy, ce qui provoque le retrait du groupe P1 et/ou du groupe H, par l'intermédiaire du module de contrôle de Tmoy. La puissance thermique en partie haute du réacteur augmente, ce qui entraîne l'augmentation de AO. Le module 56 de régulation de Pmax comprend :

- une sous-étape de calcul du déplacement dZ1 à effectuer pour le groupe P1 (qui constitue le sous-ensemble de contrôle Pi) et du déplacement à effectuer dZh pour le sous-ensemble lourd H, en fonction au moins de la consigne Z1 c et de la valeur effective Z1e de la position d'insertion du groupe P1, et
- une sous-étape de modification des positions d'insertion du groupe P1 et/ou du sous-ensemble lourd H en fonction des déplacements dZ1 et dZh calculés, en vue de maintenir le ou les groupes du sous-ensemble de contrôle P1 dans une bande morte autour la consigne de position d'insertion Z1c.

Le contrôle de Tmoy avec la seconde loi de commande fait que le groupe P1 reste dans sa bande morte puisque, comme décrit plus haut, H est déplacé lorsque P1 arrive en limite de sa bande morte. La régulation de Pmax n'est donc que rarement sollicitée. Cette régulation est détaillée ci-dessous.

On voit sur la figure 7 que, quand Tmoy est dans sa bande morte et que Z1 est sorti de la sienne, le module de régulation de Pmax ordonne le déplacement soit du groupe P1 soit du sous ensemble lourd H, en fonction du signe de l'écart de température $\Delta$Tmoy. Par exemple, si $\Delta$Z1>L2 et $\Delta$Tmoy positif, le groupe P1 est déplacé vers le bas. Ceci a pour effet de ramener le groupe P1 vers la consigne et également de faire baisser Tmoy, de telle sorte que $\Delta$Tmoy devient négatif. Le module de régulation de Pmax déplace alors le sous ensemble H vers le haut, ce qui compense le déplacement du sous ensemble P1 vers le bas vis-à-vis du contrôle de la température et de la distribution axiale de puissance (figure 8A). La situation est la même quand $\Delta$Z1 est négatif (voir la ligne la plus basse de la figure 7 et la figure 8B).

Ainsi, quand la température moyenne Tmoy est dans sa bande morte autour de sa consigne Tmoye, le sous-ensemble de contrôle Pi et le sous-ensemble lourd H sont déplacés en sens inverse pour maintenir le sous-ensemble de contrôle dans sa bande morte autour de sa position de consigne Zic.

On notera que l'écart entre la valeur effective Tmoye et la consigne Tmoyc de la température moyenne est pris en compte dans le calcul des déplacements des sous-ensembles Pi et H.

La méthode décrite ci-dessus permet de gérer les transitoires de puissance. Lors d'un transitoire de puissance, la puissance demandée à la turbine passe progressivement d'une valeur V1 à une valeur V2.

Dans le cas où V1 > V2, la puissance thermique évacuée par le circuit secondaire diminue et, dans un premier temps, devient inférieure à la puissance thermique fournie par le coeur du réacteur. La température Tmoy du liquide primaire augmente donc, ce qui provoque l'intervention du module de contrôle de Tmoy 51 ou 54, selon les cas. Ce module commande le déplacement des groupes de barres de contrôle P1 à P5 vers le bas, ce qui permet de ramener la Tmoy à sa consigne tout en maintenant la puissance thermique fournie par le coeur vers un niveau compatible avec la puissance évacuée par le circuit secondaire

Le fait de mettre en oeuvre deux lois de commande différentes l'une de l'autre permet de réaliser un contrôle efficace et entièrement automatique de trois paramètres de fonctionnement du réacteur (température du liquide primaire Tmoy, distribution axiale de puissance thermique AO, paramètre $\hat{P}$ max représentatif de la capacité de remontée en puissance du réacteur Pmax), quelle que soit la consigne de puissance, et en particulier jusqu'à 100% de la puissance nominale du réacteur.

Le fait de choisir la loi de commande en fonction de la position des groupes de barres de commande permet d'utiliser deux lois différentes, une première adaptée au cas où au moins un groupe est inséré en partie basse du coeur, et une seconde adaptée au cas où tous les groupes sont en partie haute du coeur.

Le mode particulier de réalisation décrit précédemment présente en outre d'autres avantages qui vont être décrits maintenant. Toutefois, on observera que les caractéristiques associées sont facultatives.

Dans les deux lois, le contrôle de Tmoy est réalisé en répartissant les groupes de contrôle en un sous-ensemble de contrôle et un sous-ensemble lourd, les groupes du sous-ensemble de contrôle s'insérant séquentiellement en vue de contrôler Tmoy.

Dans les deux lois également, la consigne de Pmax est traduite en une consigne de position Zic pour le sous-ensemble de contrôle Pi, ce qui permet un pilotage automatique de ce paramètre.

Dans la première loi, la distribution axiale de puissance AO est contrôlée à sa consigne en déplaçant les groupes de barres P1 à P5. Quand la température Tmoy est dans une bande morte autour de sa consigne Tmoye, les sous-ensembles Pi et H sont déplacés en sens inverses. Par ailleurs, le paramètre P max représentatif de la capacité de remontée en puissance du réacteur Pmax est contrôlée à sa consigne P maxc en jouant sur la concentration en bore dans le liquide primaire. Cette méthode de contrôle de AO n'est efficace que si au moins un groupe est inséré en partie basse du coeur.

En conséquence, dans la situation où tous les groupes sont en partie haute du coeur, c'est-à-dire quand la seconde loi est utilisée, on inverse automatiquement les modes de contrôles de la distribution axiale de puissance AO et de la capacité de remontée en puissance Pmax. AO est contrôlée à sa consigne en jouant sur la concentration en bore. Pi reste normalement dans sa bande morte puisque le sous-ensemble H est sollicité lorsque Pi arrive en limite de sa bande morte. Toutefois, si Pi se trouve en dehors de sa bande morte, le paramètre représentatif de la capacité de remontée en puissance du réacteur est contrôlé à sa consigne en déplaçant les groupes de barres P1 à P5. Quand la température Tmoy est dans une bande morte autour de sa consigne Tmoyc, les sous-ensembles Pi et H sont déplacés en sens inverses. Le contrôle de AO est ainsi efficace, même quand le réacteur est proche de sa puissance thermique nominale.

La méthode de contrôle permet de faire fonctionner le réacteur en réglage de fréquence, à puissance élevée, sans solliciter de manière excessive les groupes de contrôle P1 à P5 par des déplacements trop fréquents.

Il est à noter que la procédure d'insertion séquentielle des groupes du sous-ensemble Pi, dans laquelle on concerve un écart d'un demi-coeur entre les positions de deux groupes insérés successivement, permet de maintenir au moins un groupe en partie basse du coeur pour une très large plage de puissance du réacteur.

La méthode a été décrite pour un réacteur dont les grappes de contrôle sont réparties en cinq groupes P1 à P5, mais s'applique aussi au contrôle d'un réacteur dont les grappes de contrôle sont réparties en plus ou moins de cinq groupes.

De même, on a décrit la seconde loi de commande dans le cas où le sous-ensemble de contrôle ne contenait qu'un seul groupe. Toutefois, la seconde loi de commande pourrait s'appliquer au cas où le sous-ensemble de contrôle contient deux groupes ou plus.

Le paramètre P max représentatif de la capacité de remontée en puissance pourrait prendre en compte non seulement les positions d'insertion Zi des groupes du sous-ensemble Pi, mais aussi la position d'insertion Zh du sous-ensemble lourd H, qui constituerait une coordonnée supplémentaire du vecteur P max. La consigne P maxc serait, dans ce cas, établie à la sous-étape 13 en "figeant" Zh à sa position effective. Les consignes de positions Zic associées à la consigne $\hat{P}$ maxc seraient donc dépendantes de la position effective Zh du sous-ensemble lourd H.

La méthode décrite ci-dessus est mise enoeuvre par un ou plusieurs calculateurs, pilotant des moyens automatiques de modification de la concentration en bore et de déplacement des groupes de barres.

**Revendications**

1. Méthode de régulation de paramètres de fonctionnement du coeur d'un réacteur nucléaire à eau sous pression, ce réacteur nucléaire (8) comprenant :

   - un coeur (10) divisé en une zone haute et une zone basse et produisant une puissance thermique ;
   - une pluralité de groupes (P1 à P5) de barres de contrôle (40) de la réactivité du coeur (10), chacun susceptible d'occuper dans le coeur (10) une pluralité de positions d'insertion étagées verticalement à partir d'une position haute ;
   - des moyens pour insérer chaque groupe de barres (P1 à P5) dans le coeur (10), verticalement ;
   - un circuit primaire (30) apte à assurer la circulation d'un liquide de refroidissement primaire à travers le coeur (10) ;
   - des moyens pour ajuster la concentration en au moins un composé absorbant neutronique ([B]) dans le liquide de refroidissement primaire ;
   - des moyens pour acquérir des grandeurs (FH, FB, TBC, TBF, Q) représentatives des conditions de fonctionnement du coeur du réacteur,
   les paramètres de fonctionnement régulés comprennent au moins la température moyenne (Tmoy) du liquide de refroidissement primaire dans le coeur (10) et la distribution axiale de puissance thermique (AO) entre les zones haute et basse du coeur (10), la méthode de régulation comprenant
   - une étape d'évaluation des valeurs effectives (Tmoye, AOe, P maxe) des paramètres de fonctionnement au moins en fonction des grandeurs acquises (FH, FB, TBC, TBF, Q) ;
   - une étape de sélection d'une loi de commande de la concentration du composé absorbant ([B]) et des positions d'insertion (Z1 à Z5) des groupes de barres (P1 à P5) choisie entre au moins des première et deuxième lois de commande différentes l'une de l'autre ; et
   - une étape de régulation des paramètres de fonctionnement à l'aide de la loi de commande sélectionnée, en fonction de consignes (Tmoyc, AOc, $\hat{P}$ maxc)- relatives auxdits paramètres et des valeurs effectives (Tmoye, AOe, $\hat{P}$ maxe) évaluées, **caracterisée**
   **en ce que** les paramètres de fonctionnement régulés comprennent un paramètre ($\hat{P}$ max) représentatif de la capacité de remontée en puissance du réacteur (Pmax), la capacité de remontée en puissance (Pmax) correspondant à la puissance thermique susceptible d'être produite par le coeur (10) quand les groupes de barres (P1 à P5) sont remontés rapidement à proximité de la position haute, en ce que la méthode de régulation comprend une première étape de calcul de valeurs de consigne (Tmoyc, AOc, P maxc) des paramètres de fonctionnement au moins en fonction de consignes de pilotage (Pc, Pmaxc, AOc), et en ce que, dans la première loi de commandé, le paramètre ($\hat{P}$ max) représentatif de la capacité de remontée en puissance du réacteur (Pmax) est contrôlé à sa consigne (P maxc) en ajustant la concentration du composé absorbant neutronique ([B]) dans le liquide de refroidissement primaire, et dans la seconde loi dé commande, ledit paramètre représentatif (P max) est contrôlé à sa consigne (P maxc) en déplaçant les groupes de barres (P1 à P5), et en ce que, à l'étape de sélection, la première loi est sélectionnée quand au moins un groupe de barres (P1) se trouve dans une position d'insertion (Z1) inférieure à une position prédéterminée (Zref), et la seconde loi est sélectionnée dans le cas contraire.

2. Méthode selon la revendication 1, **caractérisée en ce que**, dans la première loi de commande, la distribution axiale de puissance (AO) est contrôlée à sa consigne (AOc) en déplaçant les groupes de barres (P1 à P5), et dans la seconde loi de commande, la distribution axiale de puissance (AO) est contrôlée à sa consigne (AOc) en ajustant la concentration du composé absorbant neutronique ([B]) dans le liquidé de refroidissement primaire.

3. Méthode selon l'une quelconque des revendications 1 à 2, **caractérisée en ce que** la première étape comprend une sous-étape de calcul de la consigne de température moyenne du liquide de refroidissement primaire dans le coeur (Tmoyc) à partir d'une grandeur (Pc) représentative de la puissance fournie au réseau électrique alimenté par le réacteur (8).

4. Méthode selon la revendication 3, **caractérisée en ce que** la première étape comprend une sous-étape de répartition des groupes de barres (P1 à P5) en un sous-ensemble (Pi) de contrôle de la température moyenne du liquide de refroidissement primaire dans le coeur (Tmoy) et un sous-ensemble lourd (H) assurant essentiellement le contrôle de la distribution axiale de puissance (AO), les groupes de barres du sous ensemble lourd (H) étant plus faiblement insérés que ceux du sous-ensemble (Pi).

5.  Méthode selon la revendication 4, **caractérisée en ce que** le sous-ensemble lourd (H) est toujours positionné dans une moitié supérieure du coeur.

6.  Méthode selon la revendication 4 ou 5, **caractérisée en ce que** le paramètre ($\hat{P}$ max) représentatif de la capacité de remontée en puissance du réacteur (Pmax) est déterminé au moins à partir des positions d'insertion du ou des groupes de barres du sous ensemble de contrôle (Pi), la première étape comprenant une sous-étape de calcul d'une consigne (Zic) de position du ou des groupes de barres du sous-ensemble de contrôle (Pi) en fonction d'une consigne de capacité de remontée en puissance (Pmaxc) et de grandeurs acquises (TBC, TBF, Q).

7.  Méthode selon la revendication 6, **caractérisée en ce que** l'étape de régulation à l'aide de la première loi de commande comprend :

    - une sous-étape de calcul des déplacements (dZi) à effectuer pour le ou les groupes de barres du sous-ensemble de contrôle (Pi) en fonction de la consigne (Tmoyc) et de la valeur effective (Tmoye) de la température moyenne du liquide de refroidissement primaire dans le coeur, et
    - une sous-étape de modification de la ou des position d'insertion du ou des groupes de barres du sous-ensemble de contrôle (Pi) en fonction des déplacements (dZi) calculés en vue de réguler la température moyenne du liquide de refroidissement primaire dans le coeur (Tmoy) à la consigne (Tmoyc).

8.  Méthode selon l'une quelconque des revendications 6 et 7, **caractérisée en ce que** l'étape de régulation à l'aide de la première loi de commande comprend

    - une sous-étape de calcul des déplacements (dZi) à effectuer pour le ou les groupes de barres du sous-ensemble de contrôle (Pi) et du déplacement (dZh) à effectuer pour le sous-ensemble lourd (H) en fonction au moins de la consigné (AOc) et de la valeur effective (AOe) de la distribution axiale de puissance thermique, et
    - une sous-étape de modification de la ou des positions d'insertion du ou des groupes de barres du sous-ensemble de contrôle (Pi) et/ou du sous-ensemble lourd (H) en fonction des déplacements calculés (dZi, dZh) en vue de réguler la distribution axiale de puissance thermique (AO) à la consigne (AOc).

9.  Méthode selon la revendication 8, **caractérisée en ce que**, quand la température moyenne du liquide de refroidissement (Tmoy) est dans une bande morte autour de sa consigne (Tmoyc), le sous-ensemble de contrôle (Pi) et le sous-ensemble lourd (H) sont déplacés en sens inverses en vue de réguler la distribution axiale de puissance thermique (AO) à sa consigne (AOc).

10. Méthode selon l'une quelconque des revendications 6 à 9, **caractérisée en ce que** l'étape de régulation à l'aide de la première loi de commande comprend

    - une sous-étape de calcul de la concentration du composé absorbant ([B]) en fonction de la consigne (P maxc) et de la valeur effective (P maxe) du paramètre représentatif de la capacité de remontée en puissance du réacteur, et
    - une sous-étape d'ajustement de la concentration du composé absorbant ([B]) dans le liquide de refroidissement primaire à la concentration calculée en vue de réguler le paramètre (P max) représentatif de la capacité de remontée en puissance du réacteur à sa valeur de consigne (P maxc).

11. Méthode selon l'une quelconque des revendications 6 à 10, **caractérisée en ce que** l'étape de régulation à l'aide de la seconde loi de commande comprend

    - une sous-étape de calcul du ou des déplacements (dZi) à effectuer pour le ou les groupes de barres du sous-ensemble de contrôle (Pi) et du déplacement (dZh) à effectuer pour le sous-ensemble lourd (H) en fonction de la consigne (Tmoyc) et de la valeur effective (Tmoye) de la température moyenne du liquide de refroidissement primaire dans le coeur et en fonction de la consigne (Z1c) et de la position effective (Z1e) du groupe P1, et
    - une sous-étape de modification de la ou des positions d'insertion du ou des groupes du sous-ensemble de contrôle (Pi) et/ou du sous-ensemble lourd (H) en fonction des déplacements (dZi, dZh) calculés, en vue de réguler la température moyenne du liquide de refroidissement primaire dans le coeur (Tmoy) à la consigne (Tmoyc).

**12.** Méthode selon la revendication 11, **caractérisée en ce que** le sous-ensemble de contrôle (Pi) est déplacé en priorité pour réguler la température moyenne du liquidé de refroidissement primaire dans le coeur (Tmoy), le sous-ensemble lourd (H) étant déplacé quand le sous-ensemble de contrôle (Pi) est arrivé aux limites d'une bande morte centrée sur sa consigne de position (Zic).

**13.** Méthode selon l'une quelconque des revendications 6 à 12, **caractérisée en ce que** l'étape de régulation à l'aide de la seconde loi commande comprend

- une sous-étape de calcul de la concentration du composé absorbant ([B]) en fonction de la consigne (AOc) et de la valeur effective (AOe) de la distribution axiale de puissance thermique, et
- une sous-étape d'ajustement de la concentration du composé absorbant ([B]) dans le liquide de refroidissement primaire à la concentration calculée en vue de réguler la distribution axiale de puissance thermique (AO) à la consigne (AOc).

**14.** Méthode selon l'une quelconque des revendications 6 à 13, **caractérisée en ce que** l'étape de régulation à l'aide de la seconde loi de commande comprend :

- une sous-étape de calcul du ou des déplacements (dZi) à effectuer pour le ou les groupes de barres du sous-ensemble de contrôle (Pi) et du déplacement (dZh) à effectuer pour le sous-ensemble lourd (H) en fonction au moins de la consigne (Zic) et de la valeur effective (Zie) des positions d'insertion du ou des groupes de barres du sous-ensemble de contrôle (Pi), et
- une sous-étape de modification des positions d'insertion du ou des groupes du sous-ensemble de contrôle (Pi) et/ou du sous-ensemble lourd (H) en fonction des déplacements (dZi, dZh) calculés, en vue de maintenir le ou les groupes du sous-ensemble de contrôle (Pi) dans une bande morte autour la consigne de position d'insertion (Zic).

**15.** Méthode selon la revendication 14, **caractérisée en ce que**, quand la température moyenne du liquide de refroidissement (Tmoy) est dans une bande morte autour de sa consigne (Tmoyc), le sous-ensemble de contrôle (Pi) et le sous-ensemble lourd (H) sont déplacés en sens inverses en vue de maintenir le ou les groupes du sous-ensemble de contrôle (Pi) dans ladite bande morte autour de sa consigne de position d'insertion (Zic).

**16.** Méthode selon l'une quelconque des revendications 4 à 15, **caractérisée en ce que** les groupes de barres du sous-ensemle de contrôle (Pi) sont insérés ou extraits séquentiellement quand la puissance thermique produite par le coeur varie, deux groupes insérés ou extraits successivement présentant des positions d'insertion respectives séparées l'une de l'autre par un écart constamment inférieur à une limite prédéterminée.

**17.** Méthode selon l'une quelconque des revendications précédentes, **caractérisée en ce que** la méthode de régulation est automatique.

**Claims**

**1.** A method for controlling operating parameters of a nuclear reactor core in pressurised water, this nuclear reactor (8) comprising:

- a core (10) divided into an upper zone and a lower zone and producing a thermal power;
- a plurality of groups (P1 to P5) of rods (40) for controlling the reactivity of the core (10), each one capable of occupying in the core (10) a plurality of insertion positions racked vertically from a high position;
- means for inserting each group of rods (P1 to P5) into the core (10) vertically;
- a primary circuit (30) able to provide the circulation of a primary cooling liquid through the core (10);
- means for adjusting the concentration of at least one neutron absorbing compound ([B]) in the primary cooling liquid;
- means for acquiring quantities (FH, FB, TBC, TBF, Q) representative of the operating conditions of the reactor core,

the controlled operating parameters comprising at least the average temperature (Tmoy) of the primary cooling liquid in the core (1) and the axial thermal power distribution (AO) between the upper and lower zones of the core (10), the control method comprising
- a step of evaluating the actual values (Tmoye, Aoe, $P^\wedge$ maxe) of the operating parameters at least according to the acquired quantities (FH, FB, TBC, TBF, Q);

- a step of selecting a control law of the absorbent compound concentration ([B]) and insertion positions (Z1 to Z5) of the groups of rods (P1 to P5) chosen between at least the first and second control laws different from one another; and

- a step of controlling the operating parameters with the aid of the selected control law according to set values (Tmoyc, Aoc, P^ maxc) relating to said parameters and actual evaluated values (Tmoye, AOe, P^ maxe), **characterised in that** the controlled operating parameters comprise a parameter (P^ max) representative of the reactor power increase capacity (Pmax), the power increase capacity (Pmax) corresponding to the thermal power able to be produced by the core (10) when the groups of rods (P1 to P5) are increased rapidly close to the high position, **in that** the control method comprises a first step of calculating set values (Tmoyc, AOc, P^ maxc) for the operating parameters at least according to set piloting values (Pc, Pmaxc, AOc), and **in that**, in the first control law, the parameter (P^ max) representative of the reactor power increase capacity (Pmax) is controlled at its set value (P^ maxc) by adjusting the concentration of the neutron absorbent compound ([B]) in the primary cooling liquid, and in the second command law, said representative parameter (P^ max) is controlled at its set value (P^ maxc) by moving the groups of rods (P1 to P5), and **in that**, at the selection stage, the first law is selected when at least one group of bars (P1) is in an insertion position (Z1) lower than a predetermined position (Zref), and the second law is selected in the contrary case.

2. The method according to Claim 1, **characterised in that** in the first control law, the axial power distribution (AO) is controlled at its set value (AOc) by displacing the groups of rods (P1 to P5), and in the second control law, the axial power distribution (AO) is controlled at its set value (AOc) by adjusting the concentration of the neutron absorbing compound ([B]) in the primary cooling liquid.

3. The method according to either of Claims 1 and 2, **characterised in that** the first step comprises a sub-step of calculating from the set average temperature for the primary cooling liquid in the core (Tmoyc) from a quantity (Pc) representative of the power provided to the electric network fed by the reactor (8).

4. The method according to Claim 3, **characterised in that** the first step comprises a sub-step of dividing the groups of rods (P1 to P5) into a sub-set (Pi) for controlling the average temperature of the primary cooling liquid in the core (Tmoy) and a heavy sub-set (H) essentially providing control of the axial power distribution (AO), the groups of rods of the heavy sub-set (H) being inserted more weakly than those of the sub-set (Pi).

5. The method according to Claim 4, **characterised in that** the heavy sub-set (H) is always positioned in an upper half of the core.

6. The method according to Claim 4 or 5, **characterised in that** the parameter (P^ max) representative of the reactor power increasing capacity (Pmax) is determined at least from the insertion positions of the group or groups of rods of the control sub-set (Pi), the first step comprising a sub-step of calculating a set position (Zic) for the group or groups of rods of the control sub-set (Pi) according to a set power increase capacity (Pmaxc) and of acquired quantities (TBC, TBF, Q).

7. The method according to Claim 6, **characterised in that** the step of controlling with the aid of the first control law comprises:

- a sub-step of calculating displacements (dZi) to be implemented for the group or groups of rods of the control sub-set (Pi) according to the set value (Tmoyc) and the actual value (Tmoye) of the average temperature of the primary cooling liquid in the core, and
- a sub-step of modifying the insertion position or positions of the group or groups of rods of the control sub-set (Pi) according to the displacements (dZi) calculated in view of controlling the average temperature of the primary cooling liquid in the core (Tmoy) at the set value (Tmoyc).

8. The method according to either of Claims 6 and 7, **characterised in that** the step of controlling with the aid of the first control law comprises

- a sub-step of calculating displacements (dZi) to be implemented for the group or groups of rods of the control sub-set (Pi) and the displacement (dZh) to be implemented for the heavy sub-set (H) according to at least the set value (AOc) and the actual value (AOe) of the thermal power axial distribution, and
- a sub-step of modifying the insertion position or positions of the group or groups of rods of the control sub-set (Pi) and/or of the heavy sub-set (H) according to the calculated displacements (dZi, dZh) in view of controlling the thermal power axial distribution (AO) at the set value (AOc).

9. The method according to Claim 8, **characterised in that** when the average temperature of the cooling liquid (Tmoy) is in a dead band around its recorded value (Tmoyc), the control sub-set (Pi) and the heavy sub-set (H) are displaced in opposite directions in view of controlling the thermal power axial distribution (AO) at its set value (AOc).

10. The method according to any of Claims 6 to 9, **characterised in that** the step of controlling with the aid of the first control law comprises

- a sub-step of calculating the concentration of the absorbent compound ([B]) according to the set value ($P^\wedge$ maxc) and the actual value ($P^\wedge$ maxe) of the parameter representative of the reactor power increase capacity, and
- a sub-step of adjusting the concentration of the absorbent compound ([B]) in the primary cooling liquid at the concentration calculated in view of controlling the parameter ($P^\wedge$ max) representative of the reactor power increase capacity at its set value ($P^\wedge$ maxc).

11. The method according to any of Claims 6 to 10, **characterised in that** the step of controlling with the aid of the second control law comprises

- a sub-step of calculating the displacement or displacements (dZi) to be implemented for the group or groups of rods of the control sub-set (Pi) and the displacement dZh) to be implemented for the heavy sub-set (H) according to the set value (Tmoyc) and the actual value (Tmoye) of the average temperature of the primary cooling liquid in the core and according to the set position (Z1c) and the actual position (Z1e) of the group P1, and
- a sub-set of modifying the insertion position or positions of the group or groups of the control sub-set (Pi) and/or of the heavy sub-set (H) according to the calculated displacements (dZi, dZh) in view of controlling the average temperature of the primary cooling liquid in the core (Tmoy) at the set value (Tmoyc).

12. The method according to Claim 11, **characterised in that** the control sub-set (Pi) is displaced prioritarily in order to control the average temperature of the primary cooling liquid in the core (Tmoy), the heavy sub-set (H) being displaced when the control sub-set (Pi) has reached the limits of a dead band centred on its set position (Zic).

13. The method according to any of Claims 6 to 12, **characterised in that** the step of controlling with the aid of the second control law comprises

- a sub-step of calculating the concentration of the absorbent compound ([B]) according to the set value (AOc) and the actual value (AOe) of the thermal power axial distribution, and
- a sub-step of adjusting the concentration of the absorbent compound ([B]) in the primary cooling liquid at the calculated concentration in view of controlling the thermal power axial distribution (AO) at the set value (AOc).

14. The method according to any of Claims 6 to 13, **characterised in that** the step of controlling with the aid of the second control law comprises:

- a sub-step of calculating the displacement or displacements (dZi) to be implemented for the group or groups of rods of the control sub-set (Pi) and the displacement (dZh) to be implemented for the heavy sub-set (H) according to at least the set value (Zic) and the actual value (Zie) of the insertion positions of the group or groups of rods of the control sub-set (Pi), and
- a sub-step of modifying the insertion positions of the group or groups of the control sub-set (Pi) and/or of the heavy sub-set (H) according to the calculated displacements (dZi, dZh), in view of maintaining the group or groups of the control sub-set (Pi) in a dead band around the set insertion position (Zic).

15. The method according to Claim 14, **characterised in that**, when the average temperature of the cooling liquid (Tmoy) is in a dead band around its set value (Tmoyc), the control sub-set (Pi) and the heavy sub-set (H) are displaced in opposite directions in view of maintaining the group or groups of the control sub-set (Pi) in said dead band around its set insertion position (Zic).

16. The method according to any of Claims 4 to 15, **characterised in that** the groups of rods of the control sub-set (Pi) are inserted or extracted sequentially when the thermal power produced by the core varies, two groups inserted or extracted successively having respective insertion positions separated from one another by a difference constantly smaller than a predetermined limit.

17. The method according to any of the preceding claims, **characterised in that** the control method is automatic.

**Patentansprüche**

1. Verfahren zum Regulieren von Funktionsparametern des Kerns eines Druckwasserkernreaktors, wobei der Kernreaktor (8) aufweist:

   - einen Kern (10), der in eine hohe Zone und eine niedrige Zone aufgeteilt ist und Wärmeleistung erzeugt,
   - eine Mehrzahl von Gruppen (P1 bis P5) von Stabelementen (40) zum Steuern der Reaktivität des Kerns (10), von denen jede geeignet ist, in dem Kern (10) eine Mehrzahl von Einsetzpositionen einzunehmen, die ausgehend von einer hohen Position vertikal abgestuft sind,
   - Mittel zum vertikalen Einsetzen jeder Gruppe von Stabelementen (P1 bis P5) in den Kern (10),
   - einen Primärkreislauf (30), der in der Lage ist, das Zirkulieren einer primären Kühlflüssigkeit durch den Kern (10) hindurch sicherzustellen,
   - Mittel zum Anpassen der Konzentration mindestens einer Neutronen-Absorptions-Zusammensetzung ([B]) in der primären Kühlflüssigkeit,
   - Mittel zum Erfassen der Werte (FH, FB, TBC, TBF, Q), die für die Betriebsbedingungen des Reaktorkerns repräsentativ sind,
   wobei die regulierten Funktionsparameter mindestens die Durchschnittstemperatur (Tmoy) der primären Kühlflüssigkeit in dem Kern (10) und die axiale Wärmeleistungsverteilung (AO) zwischen der hohen Zone und der niedrigen Zone des Kerns (10) aufweisen,
   wobei das Regulierungsverfahren aufweist:

   - einen Schritt des Evaluierens der Istwerte (Tmoye, AOe, Pmaxe) der Funktionsparameter mindestens in Abhängigkeit von den erfassten Werten (FH, FB, TBC, TBF, Q),
   - einen Schritt des Auswählens eines Gesetzes zum Steuern der Konzentration der Absorptions-zusammensetzung ([B]) und der Einsetzpositionen (z1 bis Z5) der Gruppen von Stabelementen (P1 bis P5), das aus mindestens einem ersten und einem zweiten Steuerungsgesetz ausgewählt ist, die sich voneinander unterscheiden, und
   - einen Schritt des Regulierens der Funktionsparameter mit Hilfe des ausgewählten Steuerungsgesetztes in Abhängigkeit von Sollwerten (Tmoyc, AOc, Pmaxc) in Bezug auf die Parameter, und der evaluierten Istwerte (Tmoye, AOe, Pmaxe), **dadurch gekennzeichnet, dass** die regulierten Funktionsparameter einen Parameter (Pmax) aufweisen, der für die Leistungs-Wiederanstiegs-Kapazität des Reaktors (Pmax) repräsentativ ist, wobei die Leistungs-Wiederanstiegs-Kapazität (Pmax) der Wärmeleistung entspricht, die durch den Kern (10) erzeugbar ist, wenn die Gruppen von Stabelementen (P1 bis P5) schnell wieder in die Nähe der hohen Position angehoben werden, dass das Regulierungsverfahren einen ersten Schritt des Berechnens von Sollwerten (Tmoyc, AOc, Pmaxc) der Funktionsparameter zumindest in Abhängigkeit von Steuersollwerten (Pc, Pmaxc, AOc) aufweist, und dass in dem ersten Steuerungsgesetz, der Parameter (Pmax), der für die Leistungs-Wiederanstiegs-Kapazität des Reaktors (Pmax) repräsentativ ist, auf seinen Sollwert (P maxc) reguliert wird, indem die Konzentration der Neutronen-Absorptions-Zusammensetzung ([B]) in der primären Kühlflüssigkeit angepasst wird, und in dem zweiten Steuerungsgesetz der repräsentative Parameter (Pmax) auf seinen Sollwert (Pmaxc) reguliert wird, indem die Gruppen von Stabelementen (P1 bis P5) verschoben werden, und dass in dem Auswählschritt das erste Gesetz ausgewählt wird, wenn sich mindestens eine Gruppe von Stabelementen (P1) in einer Einsetzposition (Z1) unter einer vorbestimmten Position (Zref) befindet, und das zweite Gesetz im gegenteiligen Fall ausgewählt wird.

2. Verfahren gemäß Anspruch 1, **dadurch gekennzeichnet, dass** im ersten Steuerungsgesetz die axiale Leistungsverteilung (AO) auf ihren Sollwert (AOc) reguliert wird, indem die Gruppen von Stabelementen (P1 bis P5) verschoben werden, und im zweiten Steuerungsgesetz die axiale Leistungsverteilung (AO) auf ihren Sollwert (AOc) reguliert wird, indem die Konzentration der Neutronen-Absorptions-Zusammensetzung ([B]) in der primären Kühlflüssigkeit angepasst wird.

3. Verfahren gemäß einem der Ansprüche 1 bis 2, **dadurch gekennzeichnet, dass** der erste Schritt aufweist:

   einen Teilschritt des Berechnens des

Durchschnittstemperatur-Sollwertes der primären Kühlflüssigkeit in dem Kern (Tmoyc) ausgehend von einem Wert (Pc), der für die Leistung repräsentativ ist, die dem von dem Reaktor (8) gespeisten elektrischen Netzwerk bereitgestellt wird.

4. Verfahren gemäß Anspruch 3, **dadurch gekennzeichnet, dass** der erste Schritt aufweist: einen Teilschritt zum Aufteilen der Gruppen von Stabelementen (P1 bis P5) in eine Untereinheit (Pi) zum Steuern der Durchschnittstemperatur der primären Kühlflüssigkeit in dem Kern (Tmoy) und eine schwere Untereinheit (H), die im Wesentlichen die Steuerung der axialen Leistungsverteilung (AO) sicherstellt, wobei die Gruppen von Stabelementen der schweren Untereinheit (H) weniger stark als die der Untereinheit (Pi) eingesetzt werden.

5. Verfahren gemäß Anspruch 4, **dadurch gekennzeichnet, dass** die schwere Untereinheit (H) immer in einer oberen Hälfte des Kerns positioniert wird.

6. Verfahren gemäß Anspruch 4 oder 5, **dadurch gekennzeichnet, dass** der für die Leistungs-Wiederanstiegs-Kapazität des Reaktors (Pmax) repräsentative Parameter ($\hat{P}$max) mindestens ausgehend von den Einsetzpositionen der Gruppe oder Gruppen von Stabelementen der Steuerungs-Untereinheit (Pi) bestimmt wird, wobei der erste Schritt einen Teilschritt zum Berechnen eines Sollwertes (Zi) der Position der Gruppe oder Gruppen von Stabelementen der Steuerungs-Untereinheit (Pi) in Abhängigkeit von einem Sollwert der Leistungs-Wiederanstiegs-Kapazität (Pmaxc) und von erfassten Werten (TBC, TBF, Q) aufweist.

7. Verfahren gemäß Anspruch 6, **dadurch gekennzeichnet, dass** der Schritt des Regulierens mit Hilfe des ersten Steuerungsgesetzes aufweist:

   - einen Teilschritt des Berechnens der für die Gruppe oder Gruppen von Stabelementen der Steuerungs-Untereinheit (Pi) durchzuführenden Verschiebungen (dZi) in Abhängigkeit von dem Sollwert (Tmoyc) und dem Istwert (Tmoye) der Durchschnittstemperatur der primären Kühlflüssigkeit in dem Kern, und
   - einen Teilschritt des Modifizierens der Einsetzposition oder Einsetzpositionen der Gruppe oder Gruppen von Stabelementen der Steuerungs-Untereinheit (Pi) in Abhängigkeit von den berechneten Verschiebungen (dZi) im Hinblick auf das Regulieren der Durchschnittstemperatur der primären Kühlflüssigkeit in dem Kern (Tmoy) auf den Sollwert (Tmoyc).

8. Verfahren gemäß einem der Ansprüche 6 und 7, **dadurch gekennzeichnet, dass** der Schritt des Regulierens mit Hilfe des ersten Steuerungsgesetztes aufweist:

   - einen Teilschritt des Berechnens der für die Gruppe oder Gruppen von Stabelementen der Steuerungs-Untereinheit (Pi) durchzuführenden Verschiebungen (dZi) und der für die schwere Untereinheit (H) durchzuführenden Verschiebung (dZh) in Abhängigkeit mindestens von dem Sollwert (AOc) und dem Istwert (AOe) der axialen Wärmeleistungsverteilung, und
   - einen Teilschritt des Modifizierens der Einsetzposition oder Einsetzpositionen der Gruppe oder Gruppen von Stabelementen der Steuerungs-Untereinheit (Pi) und/oder der schweren Untereinheit (H) in Abhängigkeit von den berechneten Verschiebungen (dZi, dZh) im Hinblick auf das Regulieren der axialen Wärmeleistungsverteilung (AO) auf den Sollwert (AOc).

9. Verfahren gemäß Anspruch 8, **dadurch gekennzeichnet, dass**, wenn die Durchschnittstemperatur der Kühlflüssigkeit (Tmoy) in einer Totzone um ihren Sollwert (Tmoyc) liegt, die Steuerungs-Untereinheit (Pi) und die schwere Untereinheit (H) im Hinblick auf das Regulieren der axialen Wärmeleistungsverteilung (AO) auf ihren Sollwert (AOc) in entgegengesetzten Richtungen verschoben werden.

10. Verfahren gemäß einem der Ansprüche 6 bis 9, **dadurch gekennzeichnet, dass** der Schritt des Regulierens mit Hilfe des ersten Steuerungsgesetzes aufweist:

    - einen Teilschritt des Berechnens der Konzentration der Absorptions-zusammensetzung ([B]) in Abhängigkeit von dem Sollwert ($\hat{P}$ maxc) und dem Istwert ($\hat{P}$ maxe) des für die Leistungs-Wiederanstiegs-Kapazität des Reaktors repräsentativen Parameters, und
    - einen Teilschritt des Anpassens der Konzentration der Absorptions-zusammensetzung ([B]) in der primären Kühlflüssigkeit an die berechnete Konzentration im Hinblick auf das Regulieren des für die Leistungs-Wiederanstiegs-Kapazität des Reaktors repräsentativen Parameters ($\hat{P}$ max) auf seinen Sollwert (P maxc).

**11.** Verfahren gemäß einem der Ansprüche 6 bis 10, **dadurch gekennzeichnet, dass** der Schritt des Regulierens mit Hilfe des zweiten Steuerungsgesetztes aufweist:

- einen Teilschritt des Berechnens der für die Gruppe oder Gruppen von Stabelementen der Steuerungs-Untereinheit (Pi) durchzuführenden Verschiebung oder Verschiebungen (dZi) und der für die schwere Untereinheit (H) durchzuführenden Verschiebung (dZh) in Abhängigkeit von dem Sollwert (Tmoyc) und dem Istwert (Tmoye) der Durchschnittstemperatur der primären Kühlflüssigkeit in dem Kern und in Abhängigkeit von dem Sollwert (Z1c) und der Istposition (Z1e) der Gruppe P1, und
- einen Teilschritt des Modifizierens der Einsetzposition oder Einsetzpositionen der Gruppe oder Gruppen der Steuerungs-Untereinheit (Pi) und/oder der schweren Untereinheit (H) in Abhängigkeit von den berechneten Verschiebungen (dZi, dZh) im Hinblick auf das Regulieren der Durchschnittstemperatur der primären Kühlflüssigkeit in dem Kern (Tmoy) auf den Sollwert (Tmoyc).

**12.** Verfahren gemäß Anspruch 11, **dadurch gekennzeichnet, dass** die Steuerungs-Untereinheit (Pi) bevorzugt verschoben wird, um die Durchschnittstemperatur der primären Kühlflüssigkeit in dem Kern (Tmoy) zu regulieren, wobei die schwere Untereinheit (H) verschoben wird, wenn die Steuerungs-Untereinheit (Pi) an den Grenzen einer auf ihren Positions-Sollwert (Zic) zentrierten Totzone angelangt ist.

**13.** Verfahren gemäß einem der Ansprüche 6 bis 12, **dadurch gekennzeichnet, dass** der Schritt des Regulierens mit Hilfe des zweiten Steuerungsgesetzes aufweist:

- einen Teilschritt des Berechnens der Konzentration der Absorptions-Zusammensetzung ([B]) in Abhängigkeit von dem Sollwert (AOc) und dem Istwert (AOe) der axialen Wärmeleistungsverteilung, und
- einen Teilschritt des Anpassens der Konzentration der Absorptions-Zusammensetzung ([B]) in der primären Kühlflüssigkeit an die berechnete Konzentration im Hinblick auf das Regulieren der axialen Wärmeleistungsverteilung (AO) auf den Sollwert (AOc).

**14.** Verfahren gemäß einem der Ansprüche 6 bis 13, **dadurch gekennzeichnet, dass** der Schritt des Regulierens mit Hilfe des zweiten Steuerungsgesetzes aufweist:

- einen Teilschritt des Berechnens der für die Gruppe oder Gruppen von Stabelementen der Steuerungs-Untereinheit (Pi) durchzuführenden Verschiebung oder Verschiebungen (dZi) und der für die schwere Untereinheit (H) durchzuführenden Verschiebung (dzh) in Abhängigkeit von mindestens dem Sollwert (Zic) und dem Istwert (Zie) der Einsetzpositionen der Gruppe oder Gruppen von Stabelementen der Steuerungs-Untereinheit (Pi), und
- einen Teilschritt des Modifizierens der Einsetzpositionen der Gruppe oder Gruppen der Steuerungs-Untereinheit (Pi) und/oder der schweren Untereinheit (H) in Abhängigkeit von den berechneten Verschiebungen (dZi, dZh) im Hinblick auf das Halten der Gruppe oder Gruppen der Steuerungs-Untereinheit (Pi) in einer Totzone um den Einsetzpositions-Sollwert (Zic).

**15.** Verfahren gemäß Anspruch 14, **dadurch gekennzeichnet, dass**, wenn die Durchschnittstemperatur der Kühlflüssigkeit (Tmoy) in einer Totzone um ihren Sollwert (Tmoyc) herum liegt, die Steuerungs-Untereinheit (Pi) und die schwere Untereinheit (H) im Hinblick auf das Halten der Gruppe oder Gruppen der Steuerungs-Untereinheit (Pi) in der Totzone um ihren Einsetzpositions-Sollwert (Zic) herum in entgegengesetzten Richtungen verschoben werden.

**16.** Verfahren gemäß einem der Ansprüche 4 bis 15, **dadurch gekennzeichnet, dass** die Gruppen von Stabelementen der Steuerungs-Untereinheit (Pi) sequentiell eingesetzt oder herausgezogen werden, wenn die durch den Kern erzeugte Wärmeleistung variiert, wobei zwei aufeinanderfolgend eingesetzte oder herausgezogene Gruppen jeweilige Einsetzpositionen aufweisen, die durch einen Abstand voneinander getrennt sind, der dauerhaft kleiner als eine vorbestimmte Grenze ist.

**17.** Verfahren gemäß einem der vorhergehenden Ansprüche, **dadurch gekennzeichnet, dass** das Regulierungsverfahren automatisch ist.

FIG.1

## FIG.2

FIG.3A

FIG.3B

FIG.3C

FIG.4

Pi
P1 P2
H
ΔAO >L2
-L1<ΔTmoy < L1

FIG.5A

Pi
P1 P2
H
ΔAO <-L2
-L1<ΔTmoy < L1

FIG.5B

Pi
P1 P2
H
ΔAO < -L2
ΔTmoy < -L1

FIG.5C

Pi
P1 P2
H
ΔAO > L2
ΔTmoy > L1

FIG.5D

P1    H

Zic { Z2c ... ⇧

Pmaxc = 70% PN

100 % PN

Pmax =100% PN

## FIG.6A

P1P2    H

Zic { Z2c ... Z1c

Pmaxc = 70% PN

50 % PN

Pmax =100% PN

## FIG.6B

P1P2    H

Zic { Z2c ... Z1c

Pmaxc = 70% PN

50 % PN

Pmax =70% PN

## FIG.6C

FIG.7

FIG.8A

FIG.8B

EP 1 860 664 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2493582
- FR 2544907